Europäisches Patentamt

European Patent Office

Office européen des brevets

(19)

(11) Veröffentlichungsnummer: **0 227 969**
**B1**

(12) **EUROPÄISCHE PATENTSCHRIFT**

(45) Veröffentlichungstag der Patentschrift: **17.10.90**

(21) Anmeldenummer: **86116715.3**

(22) Anmeldetag: **02.12.86**

(51) Int. Cl.⁵: **G 01 B 3/22**

(54) Einrichtung für Amplitudenmessungen.

(30) Priorität: **05.12.85 BG 72620/85**

(43) Veröffentlichungstag der Anmeldung:
**08.07.87 Patentblatt 87/28**

(45) Bekanntmachung des Hinweises auf die
Patenterteilung:
**17.10.90 Patentblatt 90/42**

(84) Benannte Vertragsstaaten:
**AT CH DE GB IT LI SE**

(56) Entgegenhaltungen:
**GB-A- 606 768**
**GB-A-1 305 533**
**US-A-3 412 471**

(73) Patentinhaber: **ZENTER SA VNEDRJAVANE V PROMISCHLENOSTTA**
**Boul. Totleben 38**
**Sofia (BG)**

(72) Erfinder: **Teodossiev, Ilko Sabev, Dipl.-Ing.**
**M. Mintschev-Strasse 15A**
**Kasanlik (BG)**
Erfinder: **Bonev, Stantscho Bonev, Dipl.-Ing.**
**Quartal V. Levski, Bl. 15**
**Kasanlik (BG)**
Erfinder: **Entschev, Slavi Geschev, Dipl.-Ing.**
**Komplex Istok, Bl. 23-E**
**Kasanlik (BG)**
Erfinder: **Dodunekov, Gantscho Mihailov, Dipl.-Ing.**
**Smertsch-Strasse 10**
**Gabrovo (BG)**
Erfinder: **Humbadjiev, Sdravko Sdravkov, Dipl.-Ing.**
**Boul. Varna 33**
**Sofia, Bankya (BG)**

(74) Vertreter: **Finck, Dieter et al**
**Patentanwälte v. Füner, Ebbinghaus, Finck**
**Mariahilfplatz 2 & 3**
**D-8000 München 90 (DE)**

EP 0 227 969 B1

## Beschreibung

Die Erfindung betrifft eine Einrichtung für Amplitudenmessungen, bestehend aus einem Gehäuse, in welchem eine abgefederte Meßstange, die mit einem Meßaufsatz endet, axial beweglich gelagert ist.

Solche Einrichtungen werden für das Messen von Amplitudenwerten, wie Rundlauf- und Frontalabweichungen, Unrundheit, Zylindrizitätsabweichungen u.a. oder bei einem Grenzwertaufnehmer verwendet.

Bei einer gattungsgemäßen, aus der SU—A—92 45 01 bekannten Einrichtung für Amplitudenmessungen ist an der Meßstange ein T-förmiger Träger starr befestigt, dessen Querteil mit Kontaktflächen versehen ist, die jeweils mit einem Kontaktelement in Berührung kommen, das an einem Ende eines Bügels an einem der Meßaufsätze eines Gleitstücks beweglich angebracht ist, das koaxial zum Querteil des Trägers montiert ist und mit dem Gehäuse der Einrichtung ein Reibpaar bildet. Der zweite Aufsatz des Gleitstücks kommt mit einem Kontaktelement in Berührung, das an dem anderen Ende des Bügels starr befestigt ist, Bei diesen aufeinanderfolgenden Berührungen wird das Messen der absolut zulässigen Abweichung vom Nennwert des Maßes festgelegt.

Nachteilig ist bei dieser bekannten Einrichtung ihre niedrige Grenzempfindlichkeit infolge der elektrischen Kontaktelemente, die geringe Betriebssicherheit infolge des einen Reibpaars und der komplizierte und nicht fertigungsgerechte Aufbau. Außerdem ist das Einfügen in automatische Systeme nicht möglich, da eine Ausschaltvorrichtung fehlt, welche den Kolben in die Ausgangsstellung zur Vorbereitung der Einrichtung für den nächsten Arbeitszyklus zurückführt.

Der Erfindung liegt die Aufgabe zugrunde, die Einrichtung für Amplitudenmessungen der gattungsgemäßen Art so auszubilden, daß sie eine erhöhte Grenzempfindlichkeit, eine verbesserte Betriebssicherheit und einen vereinfachten und fertigungsgerechten Aufbau aufweist und in automatisierte Systeme einsetzbar ist.

Diese Aufgabe wird erfindungsgemäß dadurch gelöst, daß die Meßstange als Kolben ausgebildet ist, an dem eine in dem Gehäuse angeordnete, in axialer Richtung wirkende Rückstellfeder angreift, daß in dem Kolben ein Geber starr befestigt ist, der in dem relativ zum Kolben axial beweglichen Meßaufsatz endet, daß in dem Gehäuse ein unter einem spitzen Winkel zur Kolbenachse verlaufender Kanal vorgesehen ist, in dem ein als Rotationskörper ausgebildetes Fixierelement angeordnet ist, das durch die Wirkung einer in dem Kanal vorgesehenen Feder in einer Fixierposition gegen die Kolbenseitenfläche und die Wand des Kanals gedrückt wird, wobei der Kanal und das Fixierelement so angeordnet sind, daß das Fixierelement bei einer Bewegung des Kolbens in Richtung der Rückstellfeder aus der Fixierposition herausgeschoben und bei einer Bewegung des Kolbens von der Rückstellfeder weg in die Fixierposition hineingedrückt wird, und der Kanal mit einer im Gehäuse ausgebildeten Öffnung verbunden ist, in der ein abgefederter axial verschiebbarer Ausschalter vorgesehen ist, dessen Spitze sich in einem Abstand δ vom Fixierelement befindet und der so angeordnet und ausgebildet ist, daß bei seiner Betätigung das Fixierelement aus der Fixierposition herausgedrückt wird.

Zweckmäßigerweise bildet der Kanal mit der Kolbenachse einen Winkel von 8° bis 12°. Vorzugsweise beträgt der Abstand zwischen dem Rotationskörper und der Spitze des angefederten Ausschalters mindestens 0,5 mm, wenn sich der Rotationskörper in seiner Fixierposition befindet.

Durch die Ausgestaltung des Fixierelements ist die Empfindlichkeit für ein genaues Fixieren der Meßstange hoch. Die Anordnung des Ausschalters ermöglicht einen automatischen Betrieb der Einrichtung. Die Einrichtung ist konstruktiv einfach und betriebssicher.

Anhand einer Zeichnung, die eine Einrichtung für Amplitudenmessungen im Axialschnitt zeigt, wird ein Ausführungsbeispiel der Erfindung näher erläutert.

Die Einrichtung für Amplitudenmessungen besteht aus einem Gehäuse 1, in welchem eine abgefederte Meßstange 2, die in einem Meßaufsatz 3 endet, axial beweglich gelagert ist. Die Meßstange 2 ist als Kolben 4 ausgebildet, in dessen Achse ein Geber 5 starr fixiert ist, der von einer Rückstellfeder 6 umgeben ist, die in Berührung mit dem Kolben 4 steht. Der Meßaufsatz 3 sitzt im unteren Ende des Gebers 5 axial beweglich. Der Kolben 4 steht mit einem Fixierelement 7 in Berührung, das als Rotationskörper ausgebildet ist und abgefedert in einem Kanal 8 sitzt, der im Gehäuse 1 ausgebildet ist. Der Kanal 8 ist in einem Winkel α von 8 bis 12° zur Achse des Kolbens 4 angeordnet und mit einer Öffnung 9 verbunden, die ebenfalls im Gehäuse 1 ausgebildet ist. Die Achse der Öffnung 9 ist nicht senkrecht zur Achse des Kolbens 4. In der Öffnung 9 sitzt ein abgefederter Ausschalter 10, der axial verschoben werden kann. Die Spitze des abgefederten Ausschalters 10 hat zum Rotationskörper des Fixierelements 7 einen Abstand δ, der mindestens 0,5 mm betragen muß. Das Gehäuse 1 ist mit einem Deckel 11 versehen, der die Rückstellfeder 6 und eine Feder 12 abstützt, die an dem Rotationskörper 7 anliegt und im Kanal 8 angeordnet ist. Ein unterer Deckel 13 begrenzt den Kolben 4.

Die Einrichtung für Amplitudenmessungen arbeitet wie folgt:

Wenn die Einrichtung in Richtung eines vorher eingespannten zu kontrollierenden Werkstücks bewegt wird, berührt die Ebene A des Kolbens 4 die Oberfläche des Werkstücks. Danach wird das Gehäuse der Einrichtung soweit vorgerückt, bis die relative Versetzung des Kolbens 4 in bezug auf das Gehäuse größer oder gleich der maximal zulässigen Abweichung ΔS des kontrollierten Parameters ist. Dadurch erfolgt eine Fixierung der Einrichtung in der Arbeitsposition, wobei die Oberfläche A des Kolbens 4 und die Spitze des Meßaufsatzes 3 in einer Ebene liegen. Das Messen der zu kontrollierenden Größe beginnt durch Drehen des Werkstücks. Beim Erreichen des höchsten Punkts der Werkstückoberfläche wird die Bewegung des Kolbens 4 eingestellt. Der Kolben 4 wird durch den Rotationskörper des Fixierelements 7 fixiert, woraufhin sich nur der Meßaufsatz 3 des Gebers 5 in bezug auf den Kolben 4 geradlinig bewegen kann. Auf diese Weise wird ein Abtasten der Oberfläche des kontrollierten Werkstücks und eine Anzeige der entsprechenden Abweichungen relisiert. Nach Beendigung der Messung wird die Einrichtung für einen neuen Arbeitszyklus durch Ausstoßen des Rotationskörpers des Fixierelements 7 mit Hilfe des axial verschiebbaren abgefederten Ausschalters 10 vorbereitet, der bei Druck mit dem Rotationskörper in Berührung kommt und den Kolben 4 freigibt, der in die Ausgangsstellung zurückfährt. Das Zurückfahren des Kolbens 4 in die Ausgangsstellung erfolgt unter der Einwirkung der Rückstellfeder 6. Dadurch ist die Einrichtung für den nächsten Arbeitszyklus bereit.

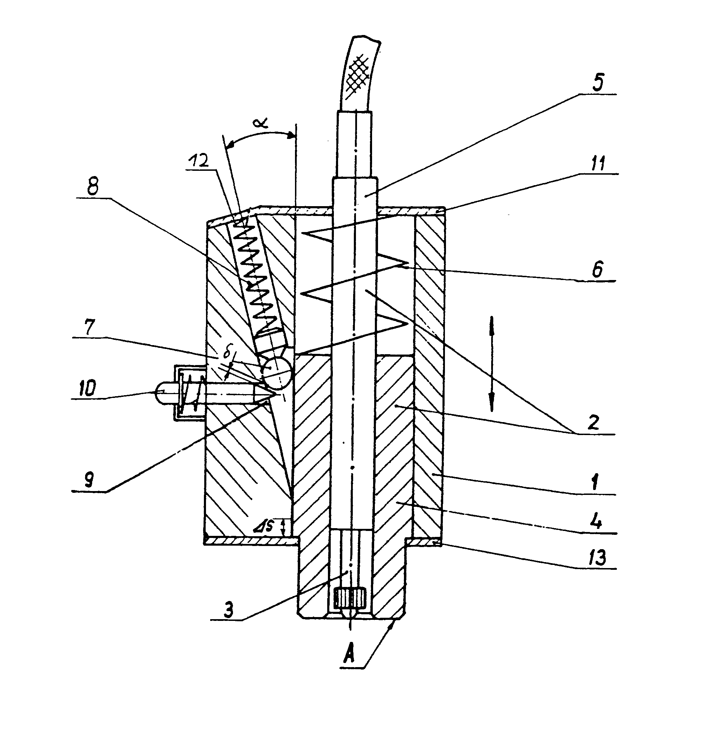

**Patentansprüche**

1. Einrichtung für Amplitudenmessungen mit einem Gehäuse (1), in welchem eine abgefederte Meßstange (2) axial beweglich gelagert ist, die mit einem Meßaufsatz (3) endet, dadurch gekennzeichnet, daß die Meßstange (2) als Kolben (4) ausgebildet ist, an dem eine in dem Gehäuse (1) angeordnete, in axialer Richtung wirkende Rückstellfeder (6) angreift, daß in dem Kolben (4) ein Geber (5) starr befestigt ist, der in dem relativ zum Kolben (4) axial beweglichen Meßaufsatz (3) endet, daß in dem Gehäuse (1) ein unter einem spitzen Winkel zur Kolbenachse verlaufender Kanal (8) vorgesehen ist, in dem ein als Rotationskörper ausgebildetes Fixierelement (7) angeordnet ist, das durch die Wirkung einer in dem Kanal (8) vorgesehenen Feder (12) in einer Fixierposition gegen die Kolbenseitenfläche und die Wand des Kanals (8) gedrückt wird, wobei der Kanal (8) und das Fixierelement (7) so angeordnet sind, daß das Fixierelement (7) bei einer Bewegung des Kolbens (4) in Richtung der Rückstellfeder (6) aus der Fixierposition herausgeschoben und bei einer Bewegung des Kolbens (4) von der Rückstellfeder (6) weg in die Fixierposition hineingedrückt wird, und der Kanal (8) mit einer im Gehäuse (1) ausgebildeten Öffnung (9) verbunden ist, in der ein abgefederter axial verschiebbarer Ausschalter (10) vorgesehen ist, dessen Spitze sich in einem Abstand (δ) vom Fixierelement (7) befindet und der so angeordnet und ausgebildet ist, daß bei seiner Betätigung das Fixierelement (7) aus der Fixierposition herausgedrückt wird.

2. Einrichtung für Amplitudenmessungen nach Anspruch 1, dadurch gekennzeichnet, daß der Kanal (8) mit der Kolbenachse einen Winkel (α) von 8° bis 12° bildet.

3. Einrichtung für Amplitudenmessungen nach Anspruch 1 oder 2, dadurch gekennzeichnet, daß der Abstand (δ) zwischen dem Fixierelement (7) und der Spitze des Ausschalters (10) mindestens 0,5 mm beträgt, wenn sich das Fixierelement (7) in der Fixierposition befindet.

**Revendications**

1. Dispositif de mesure d'amplitude muni d'un boîtier (1) dans lequel est logée, mobile axialement, une tige de mesure (2) montée à ressort et se terminant par un embout de mesure (3), caractérisé en ce que la tige de mesure (2) est conçue comme un piston (4) sur lequel agit, dans une direction axiale, un ressort de rappel (6) disposé dans le boîtier (1), en ce qu'un capteur (5) est fixé de façon rigide dans le piston (4), lequel capteur se termine par l'embout de mesure (3) mobile axialement par rapport au piston (4), en ce qu'il est prévu dans le boîtier (1) un canal (8) qui s'étend à un angle aigu par rapport à l'axe du piston et dans lequel est disposé un élément de fixation (7) conçu sous la forme d'un corps de révolution, lequel élément de fixation (7) est comprimé dans une position de fixation contre la surface latérale du piston et contre la paroi du canal (8) sous l'action d'un ressort (12) prévu dans le canal (8), le canal (8) et l'élément de fixation (7) étant disposés de telle sorte que l'élément de fixation (7) glisse hors de la position de fixation lorsque le piston (4) se déplace dans la direction du ressort de rappel (6) et soit comprimé vers l'intérieur en position de fixation lorsque le piston (4) s'éloigne du ressort de rappel (6), et le canal (8) étant relié à un orifice (9) ménagé dans le boîtier (1), dans lequel est prévu un commutateur (10) monté à ressort et apte à coulisser axialement dont la pointe se trouve à une distance (δ) de l'élément de fixation (7) et qui est disposé et conçu de telle sorte que lorsqu'il est actionné, l'élément de fixation (7) est comprimé hors de la position de fixation.

2. Dispositif de mesure d'amplitude selon la revendication 1, caractérisé en ce que le canal (8) forme avec l'axe du piston un angle (α) de 8° à 12°.

3. Dispositif de mesure d'amplitude selon la revendication 1 ou 2, caractérisé en ce que la distance (δ) entre l'élément de fixation (7) et la pointe du commutateur (10) est d'au moins 0,5 mm lorsque l'élément de fixation (7) se trouve dans la position de fixation.

**Claims**

1. Apparatus for taking measurements of amplitudes with a housing (1) in which a spring-mounted measuring rod (2) terminating with a measuring attachment (3) is mounted so as to be capable of axial movement, characterised in that the measuring rod (2) is designed as a piston (4) acted upon by a restoring spring (6) arranged in the housing (1) and acting in the axial direction, in that there is rigidly secured in the piston (4) a transmitter (5) terminating in the measuring attachment (3) which is axially moveable relative to the piston (4), in that there is provided in the housing (1) a duct (8) extending at an acute angle to the piston axis, in which there is arranged a fixing element (7), designed as a rotary body, which is pressed in a fixing position against the side surface of the piston and the wall of the duct (8) by the action of a spring (12) provided in the duct (8), wherein the duct (8) and the fixing element (7) are arranged such that the fixing element (7) is pushed out of the fixing position when the piston (4) moves towards the restoring spring (6) and is pressed into the fixing position when the piston (4) moves away from the restoring spring (6), and the duct (8) is connected to an opening (9) formed in the housing (1) in which there is provided a spring-mounted, axially displacable disconnection switch (10), the tip of which is located at a distance ($\delta$) away from the fixing element (7) and which is arranged and designed such that when it is actuated, the fixing element (7) is pressed out of the fixing position.

2. Apparatus for taking measurements of amplitudes according to claim 1, characterised in that the duct (8) forms an angle ($\alpha$) of 8° to 12° with the piston axis.

3. Apparatus for taking measurements of amplitudes according to claim 1 or 2, characterised in that the distance ($\delta$) between the fixing element (7) and the tip of the disconnection switch (10) is at least 0.5 mm, when the fixing element (7) is located in the fixing position.